Europäisches Patentamt

⑲ (19) European Patent Office

Office européen des brevets

(11) Publication number: **0 100 174**
**B1**

(12) **EUROPEAN PATENT SPECIFICATION**

(45) Date of publication of patent specification: **08.07.87**   (51) Int. Cl.⁴: **C 03 B 37/025**

(21) Application number: **83304017.3**

(22) Date of filing: **11.07.83**

(54) **Method of making glass optical fiber.**

(30) Priority: **26.07.82 US 402056**
**29.09.82 US 427525**

(43) Date of publication of application:
**08.02.84 Bulletin 84/06**

(45) Publication of the grant of the patent:
**08.07.87 Bulletin 87/28**

(84) Designated Contracting States:
**AT BE CH DE FR GB IT LI NL SE**

(56) References cited:
**EP-A-0 041 397**
**GB-A-2 081 250**
**US-A-4 286 978**

(73) Proprietor: **Corning Glass Works**
**Houghton Park**
**Corning New York 14831 (US)**

(72) Inventor: **Berkey, George Edward**
**RD-2 Riley Hill Road**
**Pine City New York 14871 (US)**

(74) Representative: **Boon, Graham Anthony et al**
**Elkington and Fife High Holborn House 52/54**
**High Holborn**
**London, WC1V 6SH (GB)**

Courier Press, Leamington Spa, England.

## Description

The present invention relates to an improved method of forming a soot preform from which optical waveguide fibers can be made.

Certain glass making processes, particularly vapor deposition processes, have been commonly employed in the formation of optical waveguide blanks. In one such process, referred to as the flame hydrolysis or outside vapor deposition process, a plurality of constituents in vapor form are entrained in a gaseous medium in predetermined amounts and thereafter are oxidized in a flame to form particulate glass called soot. A first soot coating of uniform or radially varying composition is applied to the surface of a rotating cylindrical mandrel or starting member. After the first coating of soot is deposited to form the core glass, the composition of the soot is changed to form a cladding glass coating. Heretofore, the mandrel was usually removed, and the soot preform was sintered to form a consolidated, clear glass draw blank having an aperture therethrough. Acid was flowed through the aperture to etch defects from the aperture forming surface. The resultant tubular draw blank was heated to a temperature at which the material had a low enough viscosity for drawing and was drawn to collapse the hole therein and form a fiber having the desired dimensions. Various methods employing such a flame hydrolysis technique for forming glass optical waveguide fibers are taught in U.S. Patents Nos. Re. 28,029; 3,711,262; 3,737,293; 3,823,995 and 3,826,560, the latter two patents being directed to the formation of gradient index waveguides.

The following problems have been encountered when practicing the method wherein the consolidated draw blank was formed with a longitudinal aperture caused by removal of the mandrel. Because of the dopants added to the core region of the blank to increase the refractive index thereof, the coefficient of expansion of that region is greater than that of the cladding region. Thus, when the blank cools after the consolidation process, the central or core region is put into a state of tension. The aperture in the center of the blank, which has remained after removal of the mandrel, presents a free surface in the region of high tensile force where breaks are readily initiated. Also, the rate of drawing a fiber from a preform having an aperture is limited by the rate at which the aperture will close during the drawing process. Moreover, the surface of an open preform aperture can become contaminated, especially during the high temperature fiber drawing operation.

A solution to the aforementioned problems is disclosed in U.S. Patent No. 4,251,251 (Blankenship) wherein the preform aperture closes during consolidation due to the predetermined relative viscosities of the core and cladding materials. The Blankenship patent teaches that care must be taken to minimize damage done to the preform while removing the mandrel since such damage can result in the formation of seeds at the center of the resultant consolidated draw blank. Damage to the aperture surface is especially troublesome in the practice of that method since defects cannot be etched from that surface after consolidation, the aperture having been closed during that step. Damage to the aperture surface can be reduced by forming a soft parting layer of carbon soot on the surface of the mandrel and thereafter building up the preform with glass soot.

U.S. Patent No. 4,298,365 teaches a method which further facilitates the closing of the soot preform aperture during consolidation. A thin stratum of very low viscosity glass soot is initially applied to the surface of a mandrel. First and second coatings of glass soot are then deposited on the surface of the thin stratum in accordance with the teachings of the aforementioned Blankenship patent. The mandrel is removed, and the soot preform is subjected to a high temperature whereby it is consolidated to form a dense glass blank. The glass surface tension and the relative viscosities of the inner and outer portions of the preform cause the aperture to close during the consolidation process. The thin stratum, which may include $P_2O_5$ or $B_2O_3$ smooths over the damage caused by removing the mandrel and reduces or even eliminates seed formation at the axis of the resultant glass blank.

However, the use of $P_2O_5$ or $B_2O_3$ to facilitate hold closing is detrimental to achieving ultra low loss attenuation at long wavelengths. Fibers having cores that are free from $P_2O_5$ or $B_2O_3$, e.g. fibers having cores consisting of $GeO_2$-doped silica, are preferred for low-loss operation in the infrared region of the spectrum. The aperture in a preform having a $GeO_2$—$SiO_2$ core region does not close during consolidation.

It is therefore an object of the present invention to provide an improved method of forming a high purity glass article. Another object is to provide an improved method of forming an optical fiber preform by a technique which requires the deposition of particulate glass on the surface of a mandrel.

According to one aspect of the present invention there is provided a method of forming a high purity glass article comprising the steps of:

providing a substantially cylindrical mandrel, rotating said mandrel,

directing a stream of glass particles toward said mandrel,

reciprocatingly moving said stream longitudinally with respect to said mandrel, the combined action of the rotation of said mandrel and the reciprocating movement of said stream with respect to the mandrel causing said stream to impinge upon said mandrel along a spiral path, continued deposition of said particles causing a coating of uniform thickness to be built up on said mandrel,

removing said mandrel to form a tubular porous glass preform having an aperture, and

consolidating said porous glass preform to form a tubular glass article, characterized by

depositing the first plurality of layers of glass particles on the surface of said mandrel at a deposition rate that is sufficiently low that no spiral pattern of deposited glass particles is visible, whereby the aperture-forming surface of said tubular glass article is free from devitrification.

The invention further provides a method of forming an optical fiber preform by depositing consecutive layers of glass particles on a mandrel to build up one or more coatings thereon, removing the mandrel to form a tubular porous preform having an aperture, heating the preform to form a consolidated glass preform, the composition of the first applied layers being such that the aperture-forming surface of the preform would devitrify during consolidation if said first applied layers were deposited in a conventional manner by directing a focused stream of glass particles at the preform characterized by applying the first plurality of layers of glass particles by directing a diffuse stream of particles at the mandrel, the resultant particle deposit being so fine that no spiral pattern of particles is visible after the first layer is deposited, the deposition of layers by said diffuse stream being continued at least until a continuous stratum has been built up on said mandrel.

The optical waveguide fiber may be formed from the consolidated glass preform either by being directly drawn into an optical fiber, or by being drawn into a large diameter intermediate fiber upon which additional cladding material may be added. In either process, the low pressure within the preform aperture with respect to that on the outer surface thereof assists the aperture closing process.

In the accompanying drawings:

Figures 1 and 2 illustrate the application of successive coatings of glass soot to a mandrel.

Figure 3 is a fragmentary cross-sectional view of the end of a porous preform prior to the consolidation process.

Figure 4 is a cross-sectional view of a consolidated glass preform after the aperture has been evacuated and closed at both ends.

Figure 5 is a schematic diagram illustrating the drawing of a rod from the preform.

Figure 6 illustrates the application of a coating of glass cladding soot to an intermediate fiber.

Figure 7 is a fragmentary cross-sectional view of a conventional flame hydrolysis burner.

Figure 8 is a schematic illustration of the application of a first layer of glass particles to a mandrel under conventional conditions.

Figure 9 is a schematic illustration of the application of a first layer of soot particles to a mandrel in accordance with the method of the present invention.

Figure 10 is a schematic illustration of a technique for applying a fine layer of soot particles to a mandrel.

Figure 11 is a fragmentary cross-sectional view of a modified flame hydrolysis burner which may be employed to generate a diffuse stream of soot particles.

Figures 12 and 13 are spectral attenuation curves of optical waveguide fibers formed in accordance with different embodiments of the method of the present invention.

It is to be noted that the drawings are illustrative and symbolic of the invention, and there is no intention to indicate scale or relative proportions of the elements shown therein. Further, it is to be noted that the present invention expressly contemplates both single mode and multimode waveguides regardless of any specific description, drawing, or example set out herein. The present invention also contemplates optical waveguides having cores with either a constant or gradient index of refraction. In the case of gradient index optical waveguides the cladding may be the outer portion of the core, or it may be a layer whose refractive index is lower than that of the adjacent core material by such an amount that there is an abrupt change in refractive index at the core-cladding interface.

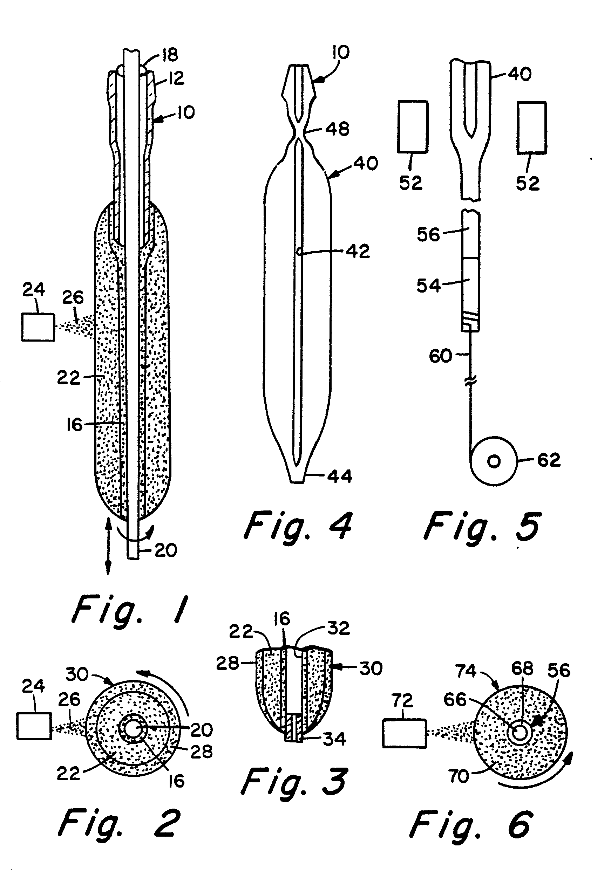

A porous preform may be formed in accordance with the method illustrated in Figures 1 and 2. A handle 10 of the type disclosed in U.S. Patent No. 4,289,522 may be employed. Handle 10 is a tubular member having a ground glass joint 12 at the one end thereof. The large diameter end of a tapered mandrel 20 extends through handle 10 and is secured thereto by shims 18. The ends of the mandrel are mounted in a lathe where it is rotated and translated as indicated by the arrows. The mandrel may be provided with a layer of carbon soot to facilitate removal of the soot preform.

Fuel gas and oxygen or air are supplied to burner 24 from a source (not shown). This mixture is burned to produce a flame which is emitted from the burner. A gas-vapor mixture is oxidized within flame to form a soot stream 26 which is directed toward mandrel 20. Suitable means for delivering the gas-vapor mixture to the burner are well known in the art; for an illustration of such means reference is made to U.S. Patent Nos. 3,826,560, 4,148,621 and 4,173,305. One or more auxiliary burners (not shown) may be employed to direct a flame toward one or both ends of the soot preform during deposition to prevent breakage. This method can be employed to produce any type of core index profile including step index and gradient index. For an illustration of suitable burners, reference is made to U.S. Patents Nos. 3,565,345 and 4,165,223. Soot deposition means 24 may also comprise nozzles such as those disclosed in U.S. Patent No. 3,957,474 which emit reactant vapors which are heated by means such as a laser beam to form a soot stream.

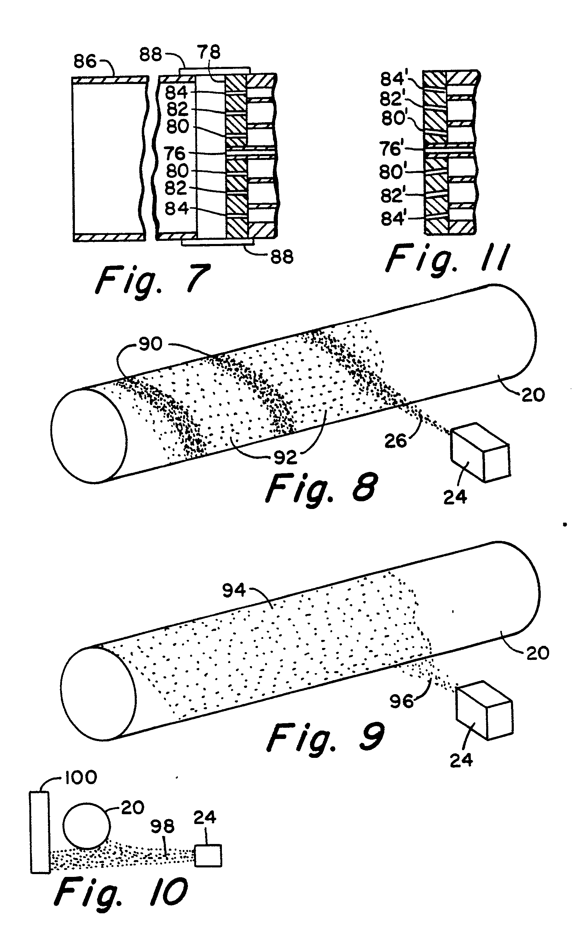

A fragmentary cross-sectional view of a conventional flame hydrolysis burner which may be employed as deposition means 24 is illustrated in Figure 7. A centrally located orifice 76 in burner face 78 is surrounded by concentric rings of orifices 80, 82 and 84. The reactant compounds emanate from orifice 76 where they are subjected to heat from a flame produced by the fuel gas and oxygen emanating from orifices 82. A stream of oxygen, referred to as the inner shield, emanates from orifices 80 this stream prevents reaction of the reactant compounds at the burner face. Finally, a stream of oxygen referred to as the outer shield emanates from orifices 84. This burner design is somewhat similar to that disclosed in U.S. Patent No. 3,698,936 issued to H. J. Moltzan, the Moltzan patent differing in that it teaches an annular slot for providing the inner shield and in that it lacks the outer shield orifices. All of the orifices of the burner are supplied by manifolds in a manner similar to that taught in the Moltzan patent.

The burner is generally operated under conditions that will provide acceptably high laydown rates and efficiency while minimizing the buildup of soot on face 78. Under such conditions, the flow rates of gases and reactants from orifices 76, 80, 82 and 84 and the sizes and locations of such orifices as well as the axial orientation thereof are such that a well focused stream of soot flows from the burner toward the mandrel. In addition, a shield 86, which is spaced a short distance from face 78 by brackets 88, protects the soot stream from ambient air currents and improves laminar flow.

Referring again to Figure 1, stratum 16 of silica soot may be initially deposited on the mandrel to create a compressive layer at the aperture forming surface of the resultant consolidated glass preform. A coating 22 of glass soot is deposited on stratum 16. A second coating 28 of soot may be applied over the outside peripheral surface of first coating 22 as shown in Figure 2. Each of the coatings 22 and 28 is generally formed of a plurality of layers. In accordance with well-known practice the refractive index of coating 28 is made lower than that of coating 22 by changing the composition of the soot being produced in flame 26. This can be accomplished by changing the concentration or type of dopant material being introduced into the flame, or by omitting the dopant material. Mandrel 20 is again rotated and translated to provide a uniform deposition of coating 28. The composite structure including first coating 22 and second coating 28 constitutes porous preform 30.

In the manufacture of optical waveguides, the materials of the core and cladding of the waveguide should be produced from a glass having minimum light attenuation characteristics, and although any optical quality glass may be used, fused silica is a particularly suitable glass. For structural and other practical considerations, it is desirable for the core and cladding glasses to have similar physical characteristics. Since the core glass must have a higher index of refraction than the cladding for proper operation, the core glass may desirably be formed of the same type of glass used for the cladding and doped with a small amount of some other material to slightly increase the refractive index thereof. For example, if pure fused silica is used as the cladding glass, the core glass can consist of fused silica doped with a material to increase its refractive index.

Many suitable materials have been used as a dopant alone or in combination with each other to increase the refractive index of fused silica. These include, but are not limited to, titanium oxide, tantalum oxide, aluminum oxide, lanthanum oxide, phosphorus oxide and germanium oxide. A core of germania doped fused silica is advantageously employed as a fiber core material since the resultant fiber exhibits low loss characteristics which extend to around 1600 nm. The cladding may be pure fused silica or silica doped with an oxide the amount of which is such that the cladding refractive index is lower than that of the core. The cladding could be doped with an oxide such as boron oxide which provides a refractive index slightly lower than that of pure fused silica and also gives the cladding layer a somewhat higher thermal coefficient of expansion than pure fused silica, thereby providing a better match between the coefficients of expansion of the core and cladding materials.

After deposition of particulate soot material to the extent required to form preform 30, mandrel 20 may be removed from the assembly by pulling it out through handle 10, thereby leaving a longitudinal aperture 32, as shown in Figure 3. Integral handle 10 provides a support for subsequent handling and processing.

The ground glass joint portion of handle 10 is secured into a complimentary female ground glass joint member, whereby drying gas may be flowed through handle 10, into the preform aperture and outwardly through the preform interstices. The steps of drying and consolidating may be performed in accordance with the teachings of U.S. Patent No. 4,125,388, which patent is hereby expressly incorporated by reference. As taught by said patent, drying may be accomplished before or during the consolidation step.

Drying can be facilitated by inserting a short section 34 of capillary tubing into that end of the porous preform aperture 32 opposite handle 10 as shown in Figure 3. The capillary tubing 34 initially permits some of the drying gas to flush water from the central region of the preform. As the porous preform is inserted into the consolidation furnace, the capillary tubing aperture closes, thereby causing all drying gas to thereafter flow through the preform interstices.

If the aperture-forming surface of the consolidated preform is formed by conventional methods it may contain a devitrified layer. The tendency for devitrification to occur is composition sensitive. For example, the deposition of pure silica stratum 16 results in a devitrified layer if that stratum is deposited under conventional conditions.

The tendency for the aperture-forming surface to devitrify is initially manifested by the formation of a white spiral 90 on the mandrel surface as the soot is being deposited thereon as illustrated in Figure 8 by a dense dot pattern. The spiral pattern is a manifestation of a variation in the density of the deposited soot. Spiral pattern 90 is formed along the spiral path along which the center of focused soot stream 26 is directed as mandrel 20 rotates and axially translates with respect to burner 24. As illustrated by the sparse dot pattern in the regions 92 between the visible spiral, some soot particles deposit with much lower density in those regions. It is thought that this variable density in the soot layer, which forms the surface of the preform aperture upon removal of the mandrel, causes devitrification sites which initiate devitrification during consolidation of the soot preform.

A consolidated preform is shown in Figure 4. After consolidation has occurred, if there has been devitrification the entire aperture-forming surface 42 of the preform has a white, frosty appearance while the remainder of the preform is transparent. If such a devitrified layer exits in the preform, a fiber drawn therefrom will contain seeds unless the layer is removed from the aperture-forming surface prior to the time that the aperture is closed. The way in which the present invention avoids producing a devitrified layer is described below.

In accordance with one aspect of the invention, devitrification of the surface of the preform aperture is prevented by the first plurality of layers of glass soot being deposited on the mandrel at a deposition rate that is sufficiently low that no spiral pattern of deposited soot is visible. For purposes hereof a layer is defined as that portion of a glass soot preform that is formed by the soot which is deposited by one pass of the burner along the mandrel. One embodiment hereof is illustrated in Figure 9 wherein the first pass of burner 24 along mandrel 20 results in the deposition of a layer 94 of soot which is so fine that hardly any glass soot can be seen. After many layers are deposited, the fine soot stratum becomes continuous. Although more than 50 burner passes were actually employed in the deposition of the fine soot layer in the example described hereinbelow, the actual number of passes could deviate widely from that number without departing from the scope of the invention. For example, the initially deposited fine soot straum can be made much thicker than the minimum thickness required to prevent devitrification, but this would decrease the amount of glass deposited per unit time and thus increase cost of production. If the deposition of the fine soot stratum is not continued for a time sufficient to render it continuous, the application of conventionally applied soot coatings on the discontinuous stratum may still result in devitrification.

Deposition of a fine, spiral-free coating 94 has been achieved by supplying the burner with a greatly reduced flow of reactant vapors. The absence of a high velocity reactant vapor stream emanating from orifice 76 tends to generate a defocused soot stream 96 that is incapable of depositing a coating of soot having a sufficient density variation to appear as a spiral.

Various other techniques may be employed to deposit a fine soot stratum of uniform density. A focused soot stream 98 can be directed above or preferably below the mandrel 20 as illustrated in Figure 10. The major portion of soot stream 98 flows past the mandrel and is collected by exhaust hood 100. Just the soot at the edge of the focused stream impinges upon the mandrel. Buoyant effects cause more of the soot particles to depart upwardly from the focused stream. After the fine soot stratum xas been built up to sufficient thickness, the focused soot stream can be directed toward the mandrel for efficient deposition of the remainder of the preform.

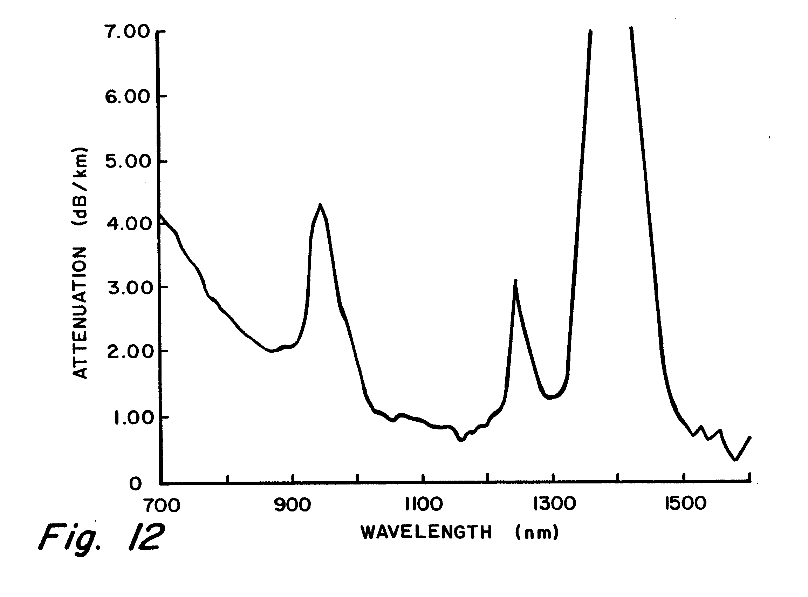

Another technique for depositing a fine soot stratum, according to another aspect of the invention, employs a burner of the type illustrated in Figure 11 wherein elements similar to those of Figure 7 are represented by primed reference numerals. The axis of each of the orifices 80', 82' and 84' makes an angle with the axis of orifice 76'. Since the streams issuing from orifices 80', 82' and 84' diverge from that issuing from oricie 76', a diffuse soot stream is produced by the burner of Figure 11. After the unfocused soot stream is employed for a sufficient time to build up a continuous layer, a conventional burner such as that illustrated in Figure 7 is employed to efficiently deposit the remainder of the preform.

After consolidation the aperture of the consolidated preform will be closed at end 44 as shown in Figure 4 if a capillary plug xas been employed. If no plug has been employed the entire aperture will remain open. In this event end 44 is closed after consolidation by a technique such as heating and pinching the same. The aperture is then evacuated through handle 10, and the other end 48 is heated and closed. The resultant article can be stored while awaiting further processing without risk of contaminating the aperture-forming wall.

If the resultant consolidated preform is drawn directly into an optical waveguide fiber, the low pressure within the aperture will assist in the closing thereof. Alternatively, the resultant preform may be provided with additional cladding material prior to drawing the optical waveguide fiber. Various well known techniques are available for providing additional cladding material. For example, it may be added by a flame oxidation process as taught in U.S. Patent No. 3,775,075 or the consolidated preform may be inserted into a tube of cladding material, the composite being drawn into an optical waveguide fiber. If additional cladding is to be provided, it is preferred that the consolidated preform be first drawn into an intermediate, large diameter fiber which is thereafter provided with additional cladding.

The intermediate fiber can be formed in a conventional draw furnace wherein the tip of the consolidated preform from which the intermediute fiber is being drawn is heated to a temperature which is slightly lower than the temperature to which the preform would be subjected to draw optical fiber therefrom. A temperature of about 1900°C is suitable for a high silica content preform. A suitable method for forming an intermediate fiber is illustrated in Figure 5. Preform 40 is mounted in a conventional draw furnace where the tip thereof is heated by resistance heater 52. A glass rod 54 may be attached to the bottom of preform 40. A cord 60 is tied to rod 54. Cord 60 is wound upon a motor-driven capstan 62, thereby causing the intermediate fiber 56 to be drawn at a suitable rate, a rate of 15 to 23 cm/min having been found to be adequate. As the intermediate fiber is drawn, the aperture readily closes since the pressure therein is low relative to ambient pressure. The aperture may close somewhat flat whereby the core roundness of the resultant fiber may be adversely affected. The core of resultant fiber will not be unacceptably out of round if the core-clad ratio of intermediate fiber 56 is sufficiently high and if the intermediate fiber is employed as the central region upon which additional cladding is added in the formation of a single-mode or a multimode fiber. The diameter of an intermediate fiber that is to be employed as a mandrel upon which cladding soot is to be deposited is preferably in the range of 4 to 10 mm. It is noted that core roundness should be satisfactory even if the preform 40 is drawn directly into an optical fiber, provided that the core-clad diameter ratio of the resultant fiber is sufficiently high.

Forming the final draw blank in a two-step process involving the formation of an intermediate fiber results in less tensile stress in the inner core region of the consolidated preform. The ratio of the core diameter to cladding diameter in preform 40 is larger than the value necessary to achieve the desired core diameter in the resultant fiber. When intermediate fiber 56 is formed, aperture 42 closes, thereby burying the surface at which breakage would have been initiated.

The embodiment wherein intermediate fiber 56 is provided with an additional coating of cladding soot is illustrated in Figure 6. Intermediate fiber 56, which comprises core region 66 and cladding region 68, is employed as a starting member upon which coating 70 is deposited by burner 72. Coating 70 is generally formed of the same material as the cladding portion 68 of intermediate fiber 56.

The resultant composite preform 74 is preferably consolidated to form a solid glass draw blank which is thereafter drawn into an optical fiber. During the consolidation process, composite preform 74 is gradually inserted into a furnace through which a consolidation atmosphere flows. The atmosphere preferable contains helium and an amount of chlorine sufficient to dry the soot prior to the time that consolidation occurs. About 5 vol. % chlorine is usually sufficient. If chlorine is not used during this consolidation process, relatively high attenuation will be evident at 950 nm and 1400 nm.

Example 1

An integral handle of the type disclosed in U.S. Patent No. 4,289,522 was employed. A tapered alumina mandrel was inserted into the handle, the central region where soot particles were ultimately deposited being tapered from about 5.5 mm to 6.5 mm. A burner of the type illustrated in Figure 7 was located 13.7 cm from the mandrel. Liquid $SiCl_4$ and liquid $GeCl_4$ was maintained at 37°C in first and second containers, respectively. The burner traversed a 49 cm section of mandrel in 25 seconds.

During the deposition of the entire preform oxygen flowed from inner shield orifices 80 and outer shield orifices 84 at 2.5 slpm and 3.0 slpm, respectively. During the formation of stratum 16, methane and oxygen flowed from orifices 82 at 6.5 slpm and 5.2 slpm, respectively. During the formation of coatings 22 and 28, the flow of methane and oxygen from orifices 82 was 5.8 slpm and 4.1 slpm, respectively.

An acetylene torch supported on the burner was first employed to deposit carbon particles on the mandrel during one burner pass. Silica soot was then deposited on the mandrel for thirty minutes during which time oxygen flowed through the first container at a rate of 0.05 slpm to form a layer of low expansion silica soot having a thickness of about 1 mm.

During the next two hours oxygen was bubbled through the second container at a rate of 0.3 slpm while the flow rate of oxygen to the first container was increased to 1.4 slpm. Thus, a step-index core region of $SiO_2$ doped with 10 weight percent $GeO_2$ was deposited to a thickness of about 12 mm. The flow of oxygen to the second container was then stopped while the rate of oxygen flow to the first container remainer at 1.4 slpm for 270 minutes during which time $SiO_2$ soot was deposited to form the cladding region of the soot preform, the outer diameter of which was 70 mm.

The soot preform was removed from the lathe, and the mandrel was removed therefrom, the integral handle remaining at one end thereof. A short section of capillary tubing was inserted into that end of the preform aperture opposite the handle. The preform was then simultaneously dried and consolidated in accordance with the teachings of U.S Patent No. 4,125,388. A drying gas consisting of 5 volume percent chlorine, the balance being helium, was flowed through the handle and into the preform aperture. A portion of this drying gas initially flowed through the capillary plug carrying with it water vapor along with reaction products from the drying reaction. As the preform was lowered into the consolidation furnace, through which a helium flushing gas was flowing, the opening in the capillary tube became sealed, and the preform was subjected to gradient consolidation.

The consolidated preform was then immediately inserted into a lathe and a torch was directed at the end therof opposite the handle. The softened glass was then pinched to close the aperture at region 44. The aperture was then evacuated through the handle. When the flame from a small torch was directed at the central region of the handle portion the aperture was quickly drawn shut to form pinched region 48.

The preform was then inserted into a draw furnace, and a cord was attached thereto. The bottom tip of the preform was heated to about 1900°C while the cord pulled downwardly on the preform at a rate of about 15 cm/min. The diameter of the resultant intermediate fiber was about 5 mm. After the intermediate fiber had been drawn to a length of about 3 m, it was broken from the preform and severed into sections about 89 cm long. The cord was reattached to the bottom of the undrawn portion of the preform, and the remainder of the preform was drawn into intermediate fiber.

The resultant final preform was gradually inserted into a consolidation furnace having a maximum temperature of 1450°C where it was consolidated while helium flowed upwardly through the furnace. The resultant optical waveguide preform was inserted into the draw furnace where the tip thereof was subjected to a temperature of about 2100°C.

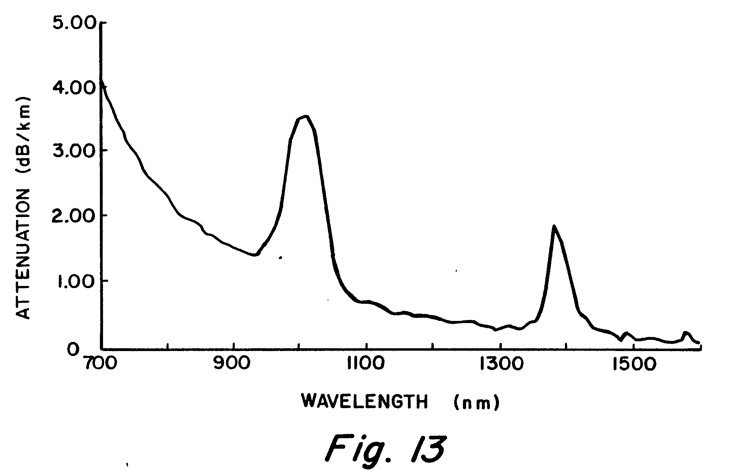

The resultant final preform was consolidated and drawn into a fiber having a core diameter of about 8 μm. The spectral attenuation curve for this fiber is shown in Figure 13. The peaks at about 950 nm and 1400 nm are indicative of a water content of about 3 ppm. The attenuation at 1480 nm is shown to be less than 0.1 dB/km.

Examples 2—5

The following experiments were performed to ascertain the effect of varying reactant flow to the flame hydrolysis burner. With all other conditions remaining the same as those specified in Example 1, the oxygen carrier gas flow to the $SiCl_4$ reservoir was set at four different levels during the formation of stratum 16 while preforms 2 through 5 were being fabricated.

The oxygen carrier flow rate for preform No. 2 was set at the level of 1.44 lpm, which is in the range of conventional flow rates for achieving efficient deposition of soot. Thereafter coatings 22 and 28 of core and cladding soot were applied as described above. After the resultant preform was consolidated, devitrification manifested by a frosty appearance was evident along the entire length of the aperture.

During the fabrication of preform No. 3, the carrier gas flow rate to the $SiCl_4$ reservoir was 0.2 lpm while stratum 16 was being deposited. After depositing coatings 22 and 28 and consolidating the resultnat soot preform, a pattern of devitrification spirals were evident along the length of the blank.

The oxygen carrier gas flow rate for preform No. 4 was set at 0.1 lpm during the deposition of stratum 16. Thereafter, coatings 22 and 28 were deposited and the soot preform was consolidated. Most of the resultant consolidated preform was acceptable for the formation of optical waveguide fibers since there was no evidence of devitrification spirals along the aperture-forming surface. However, the end of the aperture-forming surface opposite the handle contained a layer of devitrified glass. This portion of the preform would have to be removed prior to further processing.

During the fabrication of preform No. 5, the flow rate of carrier gas to the $SiCl_4$ reservoir was 0.02 lpm during the formation of stratum 16. After depositing coatings 22 and 28 and consolidating the resultant soot preform, there was no evidence of devitrification on the aperture-forming surface of the preform. Thus, the entire preform would be suitable for the formation of optical waveguide fibers.

The above described embodiments are merely illustrative of the method of the present invention, and various modifications can be made thereto without departing from the scope of the invention. For example, in the preferred embodiment described herein the soot flow rate was reduced during the deposition of the entire silica compressive stratum 16. Alternatively, the soot flow rate could be reduced during the deposition of only the first plurality of layers of silica stratum 16, provided that the thickness of that initially formed portion is sufficient to prevent the occurrence of devitrification, that is, provided that a continuous coating is formed by the first plurality of layers of fine soot.

The effect of the fine soot stratum, i.e. the elimination of devitrification at the aperture-forming surface of the consolidated preform, is not limited to $SiO_2$ coatings. Strata of silica doped with 15 wt.% $GeO_2$ as well as pure silica have both been effective in preventing devitrification. If either of these soot compositions were deposited at normal rates, devitrification would occur during consolidation.

**Claims**

1. A method of forming a high purity glass article comprising the steps of:
   providing a substantially cylindrical mandrel (20), rotating said mandrel (20),
   directing a stream of glass particles (96, 98) toward said mandrel (20),
   reciprocatingly moving said stream (96, 98) longitudinally with respect to said mandrel (20), the combined action of the rotation of said mandrel (20) and the reciprocating movement of said stream (96, 98) with respect to the mandrel (20) causing said stream (96, 98) to impinge upon said mandrel (20) along a spiral path, continued deposition of said particles causing a coating of uniform thickness to be built upon on said mandrel (20),
   removing said mandrel (20) to form a tubular porous glass preform having an aperture (42), and
   consolidating said porous glass preform to form a tubular glass article (40), characterized by depositing the first plurality of layers of glass particles on the surface of said mandrel (20) at a deposition rate that is sufficiently low that no spiral pattern of deposited glass particles is visible, whereby the aperture-forming surface of said tubular glass article (40) is free from devitrification.

2. A method as claimed in claim 1, wherein one end (44) of said aperture (42) is closed during consolidation, said method further comprising the steps of evacuating said aperture (42) and closing the remaining end (48) of said aperture (42).

3. A method as claimed in claim 2, further comprising the steps of heating said consolidated preform (40) and drawing to close said aperture (42) and reduce the diameter of said consolidated preform, thereby forming an intermediate, large diameter fibre (56), said method further comprising the step of adding cladding material (70) to said intermediate fiber (56), and drawing the resultant composite article (74) to form an optical waveguide fiber.

4. A method of forming an optical fiber preform by depositing consecutive layers of glass particles on a mandrel (20) to build up one or more coatings (22, 28) thereon, removing the mandrel (20) to form a tubular porous preform having an aperture (42), heating the preform to form a consolidated glass preform (40), the composition of the first applied layers being such that the aperture-forming surface of the preform would devitrify during consolidation if said first applied layers were deposited in a conventional manner by directing a focused stream (26) of glass particles at the preform, characterized by applying the first plurality of layers of glass particles by directing a diffuse stream of particles (96) at the mandrel (20), the resultant particle deposit being so fine that no spiral pattern of particles is visible after the first layer is deposited, the deposition of layers by said diffuse stream (96) being continued at least until a continuous stratum has been built up on said mandrel (20).

5. A method as claimed in any preceding claim, wherein depositing said first layers includes initially depositing a thin stratum of glass (16) having a thermal coefficient of expansion lower than that of the remaining said first layers.

6. A method as claimed in claim 5, wherein said thin stratum of glass (16) consists of silica.

7. A method as claimed in claim 6, wherein said remaining first layers comprise silica doped with germania.

**Patentansprüche**

1. Verfahren zur Bildung eines hochreinen Glasgegenstands, bestehend aus den Verfahrensschritten:

Vorsehen eines im wesentlichen zylindrischen Dorns (20), Drehen des Dorns (20),

Richten eines Stroms aus Glaspartikeln (96, 98) auf den Dorn (20),

Hin- und hergehendes Bewegen des Stroms (96, 98) in Längsrichtung bezüglich des Dorns (20), wobei die vereinigte Wirkung der Drehung des Dorns (20) und der hin- und hergehenden Bewegung des Stroms (96, 98) bezüglich des Dorns (20) den Strom (96, 98) veranlaßt, auf dem Dorn (20) längs einer spiralfömigen Bahn aufzutreffen, wobei ein fortegesetzter Niederschlag der Teilchen zu dem Aufbau einer Beschichtung gleichförmiger Dicke auf dem Dorn (20 führt, Entfernen des Dorns (20) zur Bildung eines rohrförmigen porösen Glasrohlings mit einer Öffnung (42), und

Konsolidieren des porösen Glasrohlings zur Bildung eines rohrförmigen Glasgegenstands (40),

Niederschlagen der ersten Mehrzahl von Schichten aus Glaspartikeln auf der Oberfläche des Dorns (20) mit einer Niederschlagsrate, welche ausreichend niedrig ist, daß kein spiralenförmiges Muster der niedergeschlagenen Glasteilchen sichtbar ist, wodurch die die Öffnung bildende Oberfläche des rohrförmigen Glasgegenstands (40) keine Entglasung aufweist.

2. Verfahren nach Anspruch 1, bei dem ein Ende (44) der Öffnung (42) während des Konsolidierens geschlossen ist, wobei das Verfahren weiterhin die Verfahrensschritte aufweist, daß die Öffnung (42) evakuuiert wird und daß das übrite Ende (48) der Öffnung (42) geschlossen wird.

3. Verfahren nach Anspruch 2, mit den weiteren Verfahrensschritten, daß der konsolidierte Rohling (40) erhitzt und ausgezogen wird, um die Öffnung (42) zu schließen und den Durchmesser des konsolidierten Rohlings zu reduzieren, um dadurch eine Zwischenfaser (56) mit großem Durchmesser zu bilden, wobei das Verfahren weiterhin den Verfahrensschritt umfaßt, daß das Mantelmaterial (70) zu der Zwischenfaser (56) hinzugefügt wird und daß der resultierende Zusammengesetzte Gegenstand (44) zur Bildung einer optischen Wellenleiterfaser ausgezogen wird.

4. Verfahren zur Bildung eines optischen Wellenleiterrohlings durch Niederschlagen aufeinanderfolgender Schichten aus Glaspartikeln auf einem Dorn (20), um auf diesem eine oder mehrere Beschichtungen (22, 28) aufzubauen, Entfernen des Dorns (20) zur Bildung eines rohrförmigen porösen Rohlings mit einer Öffnung (42), Erhitzen des Rohlings zur Bildung eines konsolidierten Glasrohlings (40), wobei die Zusammensetzung der zuerst aufgebrachten Schichten derart ist, daß die die Öffnung bildende Oberfläche des Rohlings während des Konsolidierens entglasen würden, wenn die zuerst auftebrachten Schichten in üblicher Weise niedergeschlagen worden wären, indem ein fokussierter Strom (26) aus Glaspartikeln auf den Rohling gerichtet wird, gekennzeichnet durch Aufbringen einer ersten Vielzahl von Schichten aus Glaspartikeln durch Richten eines diffusen Stroms aus Glaupartikeln (96) auf den Dorn (20), wobei der resultierende Teilchenniederschlag so fein ist, daß nach dem Niederschlagen der ersten Schicht kein spiralförmiges Muster aus Teilchen sichtbar ist, wobei das Niederschlagen von Schichten durch den diffusen Strom (96) wenigstens fortgesetzt wird, bis eine kontinuierliche Schicht auf dem Dorn (20) aufgebaut worden ist.

5. Verfahren nach einem vorangehenden Anspruch, bei dem zum Niederschlagen der ersten Schichten gehört; daß anfangs eine dünne Schicht aus Glas (16) niedergeschlagen wird, die einen niedrigeren Wärmedehnungskoeffizienten besitzt als der Rest der ersten Schichten.

6. Verfahren nach Anspruch 5, bei dem die dünne Schicht aus Glas (16) aus Kieselsäure besteht.

7. Verfahren nach Anspruch 6, bei dem die restlichen ersten Schichten mit Germanium dotierte Kieselsäure aufweisen.

**Revendications**

1. Un procédé de formation d'un article en verre de haute pureté, comprenant les opérations consistant:

à prendre un mandrin sensiblement cylindrique (20), à faire mouvoir en rotation ledit mandrin (20),

à diriger un courant de particules de verre (96, 98) vers ledit mandrin (20),

à faire mouvoir longitudinalement en va-et-vient ledit courant (96, 98) par rapport audit mandrin (20), l'action conjuguée de la rotation dudit mandrin (20) et du mouvement de va-et-vient dudit courant (96, 98) par rapport au mandrin (20) faisant arriver ledit courant (96, 98) sur ledit mandrin (20) le long d'un trajet en spirale, le dépôt continu desdites particules donnant lieu à l'accumualtion d'un revêtement d'épaisseur uniforme sur ledit mandrin (20),

à enlever ledit mandrin pour former une préforme de verre poreux tubulaire présentant une ouverture (42), et

à consolider ladite préforme de verre poreux pour former un article en verre tubulaire (40), caractérisé en ce que la première multiplicité de couches de particules de verre est déposé sur la surface dudit mandrin (20) à une vitesse de dépôt qui est suffisamment faible pour qu'aucune structure spiralée de particules de verre déposées ne soit visible, de manière que la surface de formation d'ouverture dudit article en verre tubulaire (40) soit exempte de dévitrification.

2. Un procédé selon la revendication 1, caractérisé en ce que l'une des extrémités (44) de ladite ouverture (42) est fermée pendant la consolidation, ledit procédé comprenant en outre les opérations de mise en dépression de ladite ouverture (42) et de fermeture de l'extrémité restante (48) de ladite ouverture (42).

3. Un procédé selon la revendication 2, caractérisé en ce qu'il comprend en outre les opérations de chauffage de ladite préforme consolidée (40) et d'étirage à l'effet de fermer ladite ouverture (42) et de réduire le diamètre de ladite préforme consolidée, en formant ainsi une fibre intermédiaire (56) de grand diamètre, ledit procédé comprenant en outre l'opération d'apport de matériau de gainage (70) à ladite fibre intermédiaire (56), et d'étirage de l'article composite (74) résultant pour former une fibre de guide d'ondes optique.

4. Un procédé de formation d'une préforme de fibre optique par dépôt de couches consécutives de particules de verre sur un mandrin (20) à l'effet de constituer un ou plusieurs revêtements (22, 28) sur celui-ci, enlèvement du mandrin (20) pour former une préforme poreuse tubulaire présentant une ouverture (42), chauffage de la préforme pour forme une préforme de verre consolidé (40), la composition des couches appliquées les premières étant telle que la surface de formation d'ouverture de la préforme se dévitrifierait au cours de la consolidation si lesdites couches appliquées les premières étaient déposées d'une manière classique en dirigeant un courant concentré (26) de particules de verre sur la préforme, caractérisé par l'application de la première multiplicité de couches de particules de verre en dirigeant un courant diffus de particules (96) sur le mandrin (20), le dépôt de particules résultant étant si fin qu'aucune structure spiralée de particules n'est visible après dépôt de la première couche, le dépôt de couches par ledit courant diffus (96) étant poursuivi au moins jusqu'à ce qu'une strate continue se soit accumulée sur ledit mandrin (20).

5. Un procédé selon l'une quelconque des revendications précédentes, caractérisé en ce que le dépôt desdites premières couches comprend le dépôt initial d'une strate de verre mince (16) présentant un coefficient de dilatation thermique inférieur à celui desdites premières couches restantes.

6. Un procédé selon la revendication 5, caractérisé en ce que ladite strate de verre mince (16) est constituée de silice.

7. Un procédé selon la revendication 6, caractérisé en ce que lesdites premières couches restantes comprennent de la silice dopée à l'oxyde de germanium.

Fig. 1

Fig. 2

Fig. 3

Fig. 4

Fig. 5

Fig. 6

Fig. 7

Fig. 11

Fig. 8

Fig. 9

Fig. 10

Fig. 12

*Fig. 13*

0 100 174